# EUROPÄISCHE PATENTSCHRIFT

(11) **EP 1 466 689 B1**
(45) Veröffentlichungstag und Bekanntmachung des Hinweises auf die Patenterteilung: **08.08.2007**
(21) Anmeldenummer: 04101364.0
(22) Anmeldetag: 02.04.2004
(51) Int. Cl.: B23D 49/16

(54) **Säbelsäge mit Führungsvorrichtung**
Saber saw with guide
Scie sauteuse en forme de sabre avec guide

(30) Priorität: 11.04.2003 DE 10316633
(43) Veröffentlichungstag der Anmeldung: 13.10.2004
(73) Patentinhaber: HILTI Aktiengesellschaft, 9494 Schaan (LI)
(72) Erfinder: Hartmann, Markus, 87665 Mauerstetten (DE); Below, Armin, 86916 Kaufering (DE)
(74) Vertreter: Wildi, Roland

(56) Entgegenhaltungen:
- US-A- 2 239 291
- US-A- 4 318 224
- US-A- 5 007 172
- US-A- 5 421 091

## Beschreibung

Die Erfindung betrifft eine motorisch angetriebene Säbelsäge mit einem Gehäuse, an dem im Bereich eines Gerätehalses, des zu einer Werkzeugöffnung hin ausgeformt ist und im Betrieb als Haltegriff dient eine Führungsvorrichtung zur Führung der Säbelsäge an einem Werkstück lösbar befestigt ist, wobei die Führungsvorrichtung eine Verbindungseinrichtung mit zwei Verbindungsteilen aufweist und am Gerätehals des Gehäuses eine Verbindungsaufnahmeeinrichtung ausgeformt ist, die eine Führung für beide Verbindungsteile bildet und an der die Verbindungsteile durch Formschluss mit einer Justiervorrichtung gegenüber dem Gehäuse festlegbar sind.

Bei bekannten Säbelsägen kann normalerweise ein Führungsmittel, wie ein Führungsschuh oder ein Rohradapter, angebracht werden, um eine sichere und genaue Führung der Säbelsäge auf einem Werkstück zu erzielen. Das Führungsmittel erlaubt dabei dem Anwender der Säbelsäge an einem Werkstück mit zumindest bereichsweise ebenem oder rundem Querschnitt einen präzisen Schnitt zu erzielen.

Aus der US 5,421,091 ist eine Säbelsäge mit einem Gehäuse, einem Führungsschuh zum Führen der Säbelsäge auf einem Werkstück und mit einer motorisch pendelartig angetriebenen Hubstange bekannt. Der Führungsschuh ist verschwenkbar an einem Ende einer Verbindungsschiene mit einer Längsausnehmung gelagert, wobei die Verbindungsschiene in einer im Wesentlichen quaderförmigen, flachen Gehäuseausnehmung geführt und durch Formschluss festlegbar ist.

Aus der DE 199 32 637 ist eine Säbelsäge mit einem Gehäuse, einem Führungsschuh zum Führen der Säbelsäge auf einem Werkstück und mit einer motorisch pendelartig angetriebenen Hubstange bekannt. Der Führungsschuh ist verschwenkbar an einem Ende einer Gleitwelle gelagert, die in dem Gehäuse gleitfähig untergebracht ist und durch eine Justiervorrichtung am Gehäuse festlegbar ist. Die Justiervorrichtung weist hierfür einen Bolzen auf, an dessen Kopf ein Bolzenfestziehhebel angreift. Durch Verschwenken des Bolzenfestziehhebels kann die Gleitwelle aus einem gelösten Zustand mittels des Bolzens am Gehäuse festgeklemmt beziehungsweise aus dem festgeklemmten Zustand gelöst werden.

Nachteilig an den beiden bekannten Lösungen ist, dass einerseits bei der formschlüssigen Festlegung der Verbindungseinrichtung eine sehr hohe Genauigkeit bei der Herstellung der Verbindungseinrichtung und der Verbindungsaufnahmeeinrichtung erforderlich ist, um eine ausreichende Schnittqualität zu erzielen. Zudem kann es bei der hier verwendeten Justiervorrichtung beim Verstellen der Verbindungseinrichtung leicht zu Verkantungen kommen, die wiederum ein schlechtes Handling des Führungsmittels zur Folge haben. Andererseits ist bei der kraftschlüssigen Festlegung eine ausreichend stabile und genaue Festlegung der Verbindungseinrichtung nur durch einen relativ grossen Kraftaufwand möglich, der beim Anbringen, Verstellen oder Abnehmen der Verbindungseinrichtung ebenfalls zu einem schlechten Handling führt.

Aus der US 5,007,172 ist eine Säbelsäge mit einem Führungsschuh bekannt, der verschwenkbar an einem länglichen Verbindungsteil mit rundem Querschnitt angeordnet ist. An dem Verbindungsteil sind an einem dem Führungsschuh abgewandten Ende mehrere halbrund-förmige Ausnehmungen angeordnet, über die das Verbindungsteil mittels eines an einem Schwenkhebel angeordneten Verschluss-Stiftes festlegbar ist.

Der vorliegenden Erfindung liegt die Aufgabe zugrunde, bei einer Säbelsäge mit Führungsmittel die vorgenannten Nachteile zu vermeiden und bei einfacher Handhabung eine exakte Führung zu gewährleisten.

Erfindungsgemäss wird die Aufgabe durch eine Säbelsäge gemäss Anspruch 1.

Durch den zumindest bereichsweise runden Querschnitt der Verbindungsteile, insbesondere in dem Bereich, der bei festgelegtem Zustand des Führungsmittels innerhalb der Führungsmittelaufnahme angeordnet ist, kann ein Verkanten zwischen der Verbindungseinrichtung und dem Gehäuse weitestgehend vermieden werden. Die Verbindungsaufnahmeeinrichtung weist für jedes der Verbindungsteile eine eigene Verbindungsausnehmung im Gehäuse auf, um eine möglichst stabile Führung des Führungsmittels am Gehäuse zu gewährleisten. Ferner weisen die Verbindungsausnehmungen jeweils zumindest bereichsweise einen runden Querschnitt auf, in dem das jeweilige Verbindungsteil mit dem Bereich, der einen runden Querschnitt aufweist, führbar ist. Weiterhin formen die Verbindungsteile (14) für den Formschluss mit der Justiervorrichtung (36) an jeweils einem Ende mehrere gleich grosse und mit gleich bleibenden Abständen angeordnete radial umlaufende Verrielgelungseinschnürungen (16) aus. Somit erreicht man einerseits durch den inneren Hebelarm zwischen den Verbindungsteilen und die formschlüssig wirkende Justiervorrichtung eine sowohl gegenüber Torsion als auch in Bewegungsrichtung des Werkzeugs sehr stabile Festlegung der Verbindungseinrichtung am Gehäuse. Andererseits ist jederzeit eine gute Handhabbarkeit beim Anbringen, Verstellen oder Abnehmen des Führungsmittels gewährleistet. Zudem sind die Herstellungskosten der Verbindungsteile wegen ihrer stangenförmigen Ausbildung relativ gering. Ausserdem lässt sich auf diese Weise eine besonders exakte Führung der Verbindungsteile in den Verbindungsausnehmungen erzielen, die bei Festlegung der Verbindungseinrichtung durch die Justiervorrichtung für eine besonders stabile Verbindung zwischen Führungsmittel und Gehäuse sorgt und dadurch beim Schneidvorgang eine exakte Führung der Säbelsäge gewährleistet. In die radial umlaufenden Einschnürungen kann ein Teil eines Verriegelungselementes hinein verlegt werden. Hierdurch erhält man eine stabile Festlegung der Verbindungseinrichtung in Bewegungsrichtung des Werkzeugs. Zudem kann eine solche Justiervorrichtung relativ kostengünstig hergestellt werden.

Vorteilhafterweise weisen die Verbindungsteile einen Abstand auf, der etwa dem 0.3- bis 0.9-fachen der Breite des Gehäuse am werkzeugseitigen Ende entspricht. Hierdurch wird ein relativ grosser Hebelarm zwischen den Verbindungsteilen erzielt, der insbesondere gegenüber Torsion eine stabile Festlegung des Führungsmittels am Gehäuse gewährleistet.Ausserdem kann durch den relativ grossen Abstand und die Ausrichtung der Verbindungsteile in Längsrichtung des Gerätehalses eine optimale Sicht auf einen Arbeitsbereich erzielt werden.

Die Verbindungseinrichtung weist vorteilhafterweise wenigstens einen Verbindungssteg auf, der die beiden Verbindungsteile fest miteinander verbindet, um eine hohe Stabilität der Verbindungseinrichtung, insbesondere im Bereich des Führungsmittels zu gewährleisten.

Der Verbindungssteg ist vorzugsweise am werkzeugseitigen Ende der Verbindungsteile angeordnet, um insbesondere im Arbeitsbereich eine maximale Steifigkeit der Verbindungseinrichtung sicherzustellen.

Der Verbindungssteg ist vorzugsweise mit einem U-förmigen Querschnitt ausgebildet, um eine stabile Verbindung mit den Verbindungsteilen herstellen zu können.

Vorteilhafterweise weist der Verbindungssteg Befestigungsmittel zur drehbaren Lagerung des Führungsmittels auf. Auf diese Weise kann die Lagerung des Führungsmittels weitestgehend unabhängig von den Verbindungsteilen erfolgen, wodurch geringe Herstellungskosten erzielt werden können.

Der Verbindungssteg ist vorzugsweise aus einem Biegestanzteil hergestellt, um eine wirtschaftliche Herstellung der Verbindungseinrichtung zu gewährleisten.

Die Erfindung wird nachstehend anhand eines Ausführungsbeispieles näher erläutert. Es zeigen:
- Fig. 1: eine perspektivische Darstellung des Getriebeteils einer erfindungsgemässen Säbelsäge mit davon getrennter Führungsvorrichtung,
- Fig. 2: eine perspektivische Explosionsdarstellung der in Fig. 1 dargestellten Führungsvorrichtung und
- Fig.3: eine perspektivische Darstellung von der Unterseite des Getriebegehäuses mit explosionsartig dargestellter Justiervorrichtung.

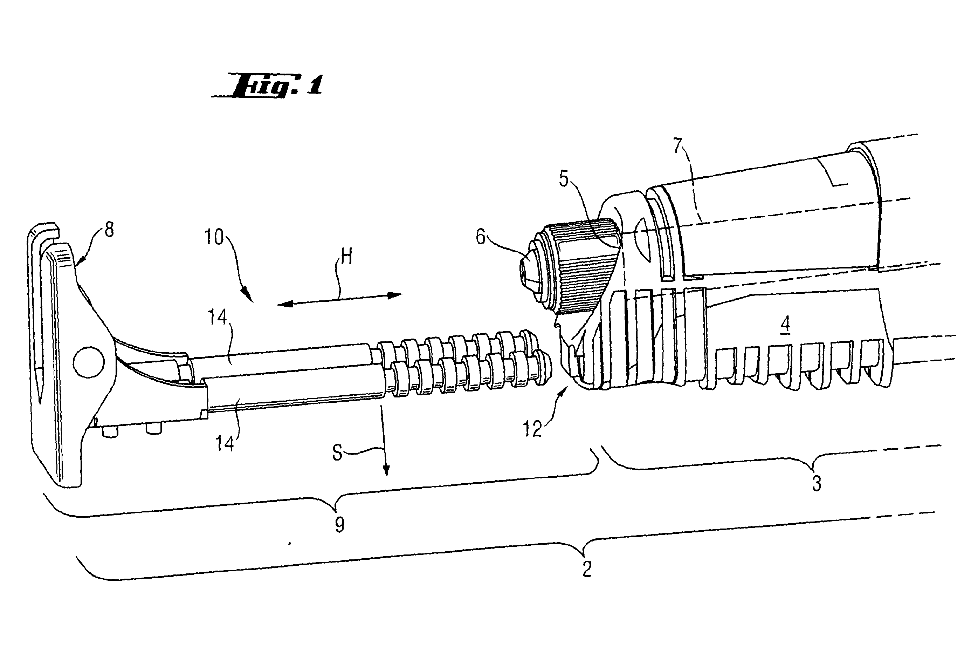

Die Fig. 1 zeigt den werkzeugseitigen vorderen Teil einer motorisch angetriebenen Säbelsäge 2. Diese weist ein Gehäuse 4 auf, das an einem werkzeugseitigen Ende eine Werkzeugöffnung 5 aufweist und zu dieser hin einen Gerätehals 3 ausformt, der im Betrieb als Haltegriff genutzt wird. Aus diesem Grund ist der Gerätehals 3 im endmontierten Zustand von einem Handschutz umgeben, der aus Gründen des besseren Verständnisses nicht gezeigt ist.

Durch die Werkzeugöffnung 5 hindurch wird im Betrieb eine Werkzeugaufnahme 6, die am freien Ende einer gestrichelt dargestellten Hubstange 7 montiert ist, mit einem daran befestigten, nicht dargestellten Sägeblatt hin- und herbewegt.

Losgelöst von dem Gehäuse 4 ist eine Führungsvorrichtung 9 mit einem Führungsmittel 8 in Form eines Führungsschuhs dargestellt. Das Führungsmittel 8 ist über eine Verbindungseinrichtung 10, die in Längsrichtung des Gerätehalses 3 in eine Verbindungsaufnahmeeinrichtung 12 des Gehäuses 4 eingesteckt werden kann, am Gehäuse 4 festlegbar.

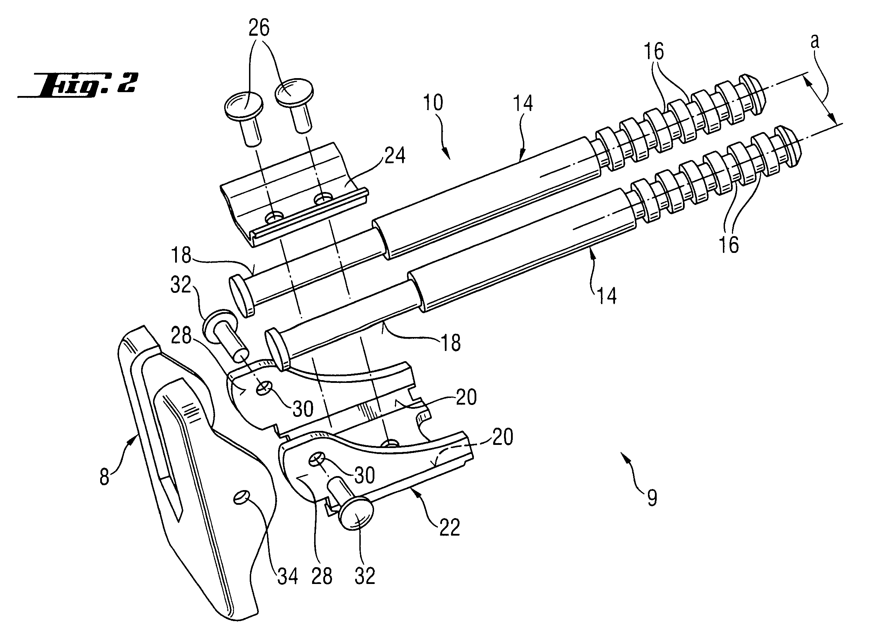

In Fig. 2 ist die Führungsvorrichtung 9 in Explosionsdarstellung gezeigt. Wie der Darstellung zu entnehmen ist, weist die Verbindungseinrichtung 10 zwei stangenförmige Verbindungsteile 14 mit jeweils rundem Querschnitt auf. Diese formen an jeweils einem Ende mehrere gleich grosse und mit gleich bleibenden Abständen angeordnete Verriegelungseinschnürungen 16 aus. Am gegenüber liegenden Ende weisen beide Verbindungsteile 14 jeweils eine längliche Befestigungseinschnürung 18 auf.

Bei der Montage der Führungsvorrichtung 9 werden die Verbindungsteile 14 mit ihren Befestigungseinschnürungen 18 an jeweils einen entsprechend ausgeformten Anlegeabschnitt 20 eines Verbindungssteges 22 angelegt und mittels eines Formbleches 24, das über zwei Befestigungsnieten 26 an dem Verbindungssteg 22 befestigt wird, an diesem festgeklemmt. Im montierten Zustand der Führungsvorrichtung 9 sind die Verbindungsteile 14 parallel zueinander angeordnet und weisen einen Achsabstand a auf, der etwa dem 0,3- bis 0,9-fachen der Breite b des werkzeugseitigen Endes des Gehäuses 4 entspricht.

Der Verbindungssteg 22 ist mit einem im Wesentlichen U-förmigen Querschnitt ausgeformt und weist an seinen beiden freien Enden 28 jeweils eine Aufnahmeausnehmung 30 für jeweils einen Lagerniet 32 auf. Diese Lagernieten 32 ragen im montierten Zustand durch jeweils eine Drehachsenausnehmung 34, die an zwei Seiten des Führungsmittels 8 ausgeführt ist. Auf diese Weise ist das Führungsmittel 8 während eines Schneidvorganges um die Lagernieten 32 herum verschwenkbar am Verbindungssteg 22 gehalten. Die Aufnahmeausnehmungen 30 und die Lagernieten 32 wirken demnach als Befestigungsmittel zur drehbaren Lagerung des Führungsmittels 8 am Verbindungssteg 22 beziehungsweise an die Verbindungseinrichtung 10.

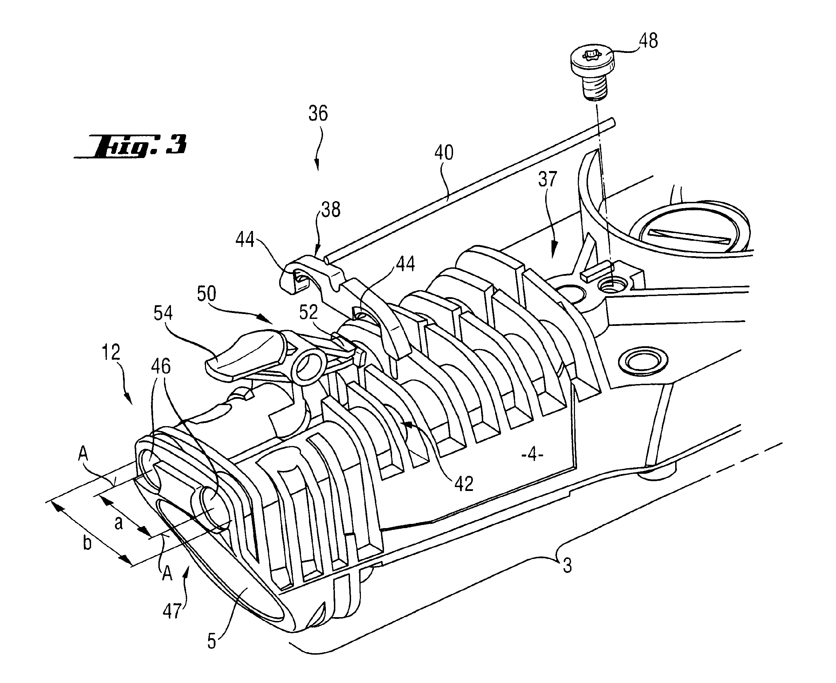

Fig. 3 zeigt eine Justiervorrichtung 36 für die Verbindungseinrichtung 10, die an einer unteren Seite 37 des Gehäuses 4 angeordnet ist. Diese weist ein Verriegelungselement 38 auf, das im unbetätigten Zustand durch ein stabförmiges Federelement 40 in eine Gehäuseöffnung 42 des Gehäuse s 4 gedrückt wird. Hierbei ragt das Verriegelungselement 38 mit jeweils einem Verriegelungsabschnitt 44 in eine von zwei im Wesentlichen zylinderförmige Verbindungsausnehmungen 46 der Verbindungsaufnahmeeinrichtung 12, die sich im Wesentlichen in Längsrichtung des Gerätehalses 3 erstrecken. Die Achsen A der beiden Verbindungsausnehmungen 46 weisen einen Abstand a auf, der entsprechend dem Achsabstand a der Verbindungsteile 14 in einem Bereich des 0,3 bis 0,9-fachen der Breite b des Gehäuses 4 an seinem werkzeugseitigen Endbereich 47 liegt.

Das Federelement 40 ist an seinem von dem Verriegelungselement 38 abgewandten Ende über eine Schraube 48 am Gehäuse 4 befestigt. Ferner ist ein Wippelement 50 vorgesehen, das mit einem Stellende 52 an dem Verriegelungselement 38 anliegt und über ein knopfförmiges Betätigungsteil 54 betätigbar ist.

Beim Befestigen des Führungsmittels werden die Verbindungsteile 14 der Verbindungseinrichtung 10 in die Verbindungsausnehmungen 46 der Verbindungsaufnahmeeinrichtung 12 geschoben. Gleichzeitig wird der Betätigungsteil 54 des Wippelementes 50 gedrückt. Hierdurch bewegt das Stellende 52 das Verriegelungselement 38 entgegen der Kraft des Federelementes 40. Auf diese Weise werden die Verriegelungsabschnitte 44 des Verriegelungselementes 38 aus den Verbindungsausnehmungen 46 herausbewegt, so dass die Verbindungsteile 14 am Verriegelungselement 38 vorbei in die Verbindungsaufnahmeeinrichtung 12 hinein geschoben werden können.

Sobald ein gewünschter Abstand des Führungsmittels 8 gegenüber dem Gehäuse 4 hergestellt ist, wird der Betätigungsteil 54 des Wippelementes 50 losgelassen. Dies hat zur Folge, dass das Federelement 40 das Verriegelungselement 38 mit den Verriegelungsabschnitten 44 durch die Gehäuseöffnung 42 hindurch in die Verbindungsausnehmungen 46 hinein verlegt. Hierbei greifen die Verriegelungsabschnitte 44 in die in dieser Stellung der Verbindungseinrichtung 10 an der Gehäuseöffnung 42 angeordneten Einschnürungen 16 der beiden Verbindungsteile 14 ein. Somit ist das Führungsmittel 8 gegenüber dem Gehäuse 4 der Säbelsäge 2 durch Formschluss der Verbindungseinrichtung 10 mit der Justiervorrichtung 36 in Längsrichtung des Gerätehalses festgelegt. Gleichzeitig sorgen die runden Querschnitte der Verbindungsteile 14 in den beiden zylinderförmigen Verbindungsausnehmungen 46 für eine hohe Torsionssteifigkeit.

Um den Abstand des Führungsmittels 8 gegenüber dem Gehäuse 4 zu verändern, wird das Betätigungsteil 54 erneut gedrückt und das Führungsmittel 8 zusammen mit der Verbindungseinrichtung 10 in die entsprechende Position verschoben. Die Führung der runden Querschnitte der Verbindungsteile 14 in den zylinderförmigen Verbindungsausnehmungen 46 sorgt dabei für eine störungsfreie Verstellbarkeit der Verbindungseinrichtung 10 in der Verbindungsaufnahmeeinrichtung 12. In der neuen Position wird dann das Wippelement 50 wie oben beschrieben losgelassen, damit das Verriegelungselement 38 formschlüssig in die betreffenden Verriegelungseinschnürungen 16 greifen kann.

Gleichermassen ist es auch möglich, bei betätigtem Wippelement 50 das Führungsmittel 8 zusammen mit der Verbindungseinrichtung 10 vollständig vom Gehäuse 4 der Säbelsäge 2 abzunehmen.

## Patentansprüche

1. Motorisch angetriebene Säbelsäge (2) mit einem Gehäuse (4), an dem im Bereich eines Gerätehalses (3), der zu einer Werkzeugöffnung (5) hin ausgeformt ist und im Betrieb als Haltegriff dient, eine Führungsvorrichtung (9) zur Führung der Säbelsäge (2) an einem Werkstück lösbar befestigt ist, wobei die Führungsvorrichtung (9) eine Verbindungseinrichtung (10) mit zwei Verbindungsteilen (14) aufweist und am Gerätehals (3) des Gehäuses (4) eine Verbindungsaufnahmeeinrichtung (12) ausgeformt ist, die eine Führung für beide Verbindungsteile (14) bildet und an der die Verbindungsteile (14) durch Formschluss mit einer Justiervorrichtung (36) gegenüber dem Gehäuse (4) festlegbar sind, wobei die Verbindungsteile (14) stangenförmig ausgebildet sind und zumindest bereichsweise einen runden Querschnitt aufweisen, wobei die Verbindungsaufnahmeeinrichtung (12) für jedes der Verbindungsteile (14) eine separate Verbindungsausnehmung (46) im Gehäuse (4) aufweist, die zumindest bereichsweise einen runden Querschnitt aufweist, in dem das jeweilige Verbindungsteil (14) mit dem Bereich, der einen runden Querschnitt aufweist, führbar ist,
wobei die Verbindungsteile (14) für den Formschluss mit der Justiervorrichtung (36) an jeweils einem Ende mehrere gleich grosse und mit gleich bleibenden Abständen angeordnete radial umlaufende Verrielgelungseinschnürungen (16) ausformen.

2. Säbelsäge nach Anspruch 1, **dadurch gekennzeichnet, dass** die Verbindungsteile (14) einen Achsabstand (a) aufweisen, der etwa dem 0.3- bis 0.9-fachen der Breite (b) des Gehäuses (4) in einem werkzeugseitigen Endbereich (47) entspricht

3. Säbelsäge nach einem der Ansprüche 1 bis 2, **dadurch gekennzeichnet, dass** die Verbindungseinrichtung (10) wenigstens einen Verbindungssteg (22) aufweist, der die Verbindungsteile (14) fest miteinander verbindet.

4. Säbelsäge nach Anspruch 3, **dadurch gekennzeichnet, dass** der Verbindungssteg (22) am werkzeugseitigen Ende der Verbindungsteile (14) angeordnet ist

5. Säbelsäge nach Anspruch 3 oder 4, **dadurch gekennzeichnet, dass** der Verbindungssteg (22) einen U-förmigen Querschnitt aufweist.

6. Säbelsäge nach einem der Ansprüche 3 bis 5, **dadurch gekennzeichnet, dass** der Verbindungssteg (22) Befestigungsmittel (30, 32) zur drehbaren Lagerung des Führungsmittels (8) aufweist

7. Säbelsäge nach einem der Ansprüche 3 bis 6, **dadurch gekennzeichnet, dass** der Verbindungssteg (22) aus einem Biegestanzteil besteht.

## Claims

1. Motor-driven sabre saw (2) comprising a housing (4) on which a guiding device (9) for guiding the sabre saw (2) on a workpiece is removably mounted in the region of a neck (3) formed towards a tool opening (5) and serving as a handle during operation, wherein the guiding device (9) has a connecting device (10) with two connecting parts (14) and a connecting receiver (12) which forms a guide for the two connecting parts (14) and on which the connecting parts (14) can be secured relative to the housing (4) by means of a positive connection with an adjusting device (36) is formed on the neck (3) of the housing (4), wherein the connecting parts (14) are rod-shaped and have a circular cross section at least in some regions, wherein the connecting receiver (12) has a separate connecting recess (46) in the housing (4) for each of the connecting parts (14), the connecting recess at least in some regions having a circular cross section in which the respective connecting part (14) can be guided by means of the region having a circular cross section, and wherein the connecting parts (14) form a plurality of radially circumferential locking constrictions (16) of identical size arranged at uniform intervals at one end for the positive connection with the adjusting device (36).

2. Sabre saw according to claim 1, **characterised in that** the connecting parts (14) have an axial spacing (a) which corresponds approximately to 0.3 to 0.9 times the width (b) of the housing (4) in an end region (47) on the tool side.

3. Sabre saw according to one of claims 1 to 2, **characterised in that** the connecting device (10) has at least one connecting web (22) which connects the connecting parts (14) firmly together.

4. Sabre saw according to claim 3, **characterised in that** the connecting web (22) is arranged at the tool end of the connecting parts (14).

5. Sabre saw according to claim 3 or claim 4, **characterised in that** the connecting web (22) has a U-shaped cross section.

6. Sabre saw according to one of claims 3 to 5, **characterised in that** the connecting web (22) has fastening means (30, 32) for rotatably mounting the guide means (8).

7. Sabre saw according to one of claims 3 to 6, **characterised in that** the connecting web (22) consists of a formed part.

## Revendications

1. Scie sabre à entraînement motorisé (2), comprenant un carter (4) auquel un dispositif de guidage (9) destiné à guider la scie sabre (2) sur une pièce est fixé de manière détachable dans la zone d'un col d'appareil (3) qui est évidée en direction d'une ouverture d'outil (5) et qui, en fonctionnement, sert de poignée, le dispositif de guidage (9) comportant un dispositif de liaison (10) avec deux pièces de liaison (14) et, sur le col d'appareil (3) du carter (4), un dispositif récepteur de liaison (12) qui forme un guide pour les deux pièces de liaison (14) et auquel les pièces de liaison (14) peuvent être assujetties par liaison par complémentarité de formes à l'aide d'un dispositif d'ajustement (36) par rapport au carter (4), les pièces de liaison (14) étant conformées en tiges et présentant au moins par endroits une section transversale ronde, le dispositif récepteur de liaison (12) comportant dans le carter (4), pour chacune des pièces de liaison (14), un logement de liaison séparé (46) qui présente au moins par endroits une section transversale ronde dans laquelle la pièce de liaison concernée (14) peut être guidée par l'intermédiaire de la zone à section transversale ronde, les pièces de liaison (14) comportant à l'une de leurs extrémités plusieurs rétrécissements de verrouillage périphériques radiaux de taille identique et équidistants (16) pour les relier par complémentarité de formes avec le dispositif d'ajustement (36).

2. Scie sabre selon la revendication 1, **caractérisée en ce que** les pièces de liaison (14) présentent un entraxe (a) qui correspond sensiblement à 0,3 à 0,9 fois la largeur (b) du carter (4) dans une zone d'extrémité côté outil (47).

3. Scie sabre selon une des revendications 1 à 2, **caractérisée en ce que** le dispositif de liaison (10) comporte au moins une chape de liaison (22) qui solidarise les pièces de liaison (14) entre elles.

4. Scie sabre selon la revendication 3, **caractérisée en ce que** la chape de liaison (22) est disposée à l'extrémité côté outil des pièces de liaison (14).

5. Scie sabre selon la revendication 3 ou 4, **caractérisée en ce que** la chape de liaison (22) présente une section transversale en U.

6. Scie sabre selon une des revendications 3 à 5, **caractérisée en ce que** la chape de liaison (22) comporte des moyens de fixation (30, 32) pour le montage à rotation du moyen de guidage (8).

7. Scie sabre selon une des revendications 3 à 6, **caractérisée en ce que** la chape de liaison (22) est constituée par une pièce en tôle découpée.
